# EUROPEAN PATENT APPLICATION

(11) **EP 1 441 470 A1**
(43) Date of publication of application: **28.07.2004**
(21) Application number: 03290149.8
(22) Date of filing: 21.01.2003
(51) Int. Cl.: H04L 12/28, H04L 29/06

(54) **Network attached storage method and system**

(71) Applicant: Hewlett-Packard Company, Palo Alto, CA 94304 (US)
(72) Inventor: Richard, Bruno, 38920 Crolles (FR); Augerat, Philippe, 38000 Grenoble (FR); Lombard, Pierre, 38100 Grenoble (FR)
(74) Representative: Lloyd, Richard Graham

(57) **Abstract**

A network attached storage system includes a metadata server (10) which can communicate with a client device (12) via a suitable network (14). A plurality of storage servers (20-24), each of which has associated therewith a data storage memory (26- 30), is coupled directly to the network (14) and thereby to the client device (12). The metadata server (10) operates as the interface between the client device (12) and the data storage memories (26-30). A separate control network (32) provides for the transmission of control signals from the metadata server (10) to the relevant storage servers (20-24) and provides a very reactive link between the storage servers (20-24) for broadcast purposes. As the data broadcast from the control network (32) can be limited in size, it is not necessary to have a high bandwidth link but just to have low latency. Data is transferred to and from the client (12) and data servers (20-24) directly through the network (14) and not through the server (18), thereby avoiding bottlenecks through the server (18).

## Description

### Field of the Invention:

The present invention relates to a network attached storage system and to a method of operating such a system.

### Background of the Invention:

As personal computer storage is limited, it is desirable to provide additional storage facilities. One method of achieving this is by providing a plurality of computers with their free storage space aggregated in parallel. This is particularly useful in the context of a cluster of machines. However, the directory/index/look-up function of such a distributed file system is highly loaded and leads to a slowdown due to network bottlenecks.

Network attached storage systems are well known. One example is the Network File System (NFS) developed by Sun Microsystems. Another example is the Common Internet File System (CIFS) used by the Windows^{TM} shared file system. Typically, these systems provide a networked file storage system which can store large numbers of files, in which the physical files are stored in a plurality of storage systems networked together and accessible through a server. Although it is possible to provide a large storage space with these network attached storage systems, they are on the whole difficult to scale up as and when necessary and can require relatively complex security protocols. Moreover, data transfer is carried out, for the purposes of control and security, through a centralised hub (the server) which itself can become a processing bottleneck.

### Summary of the Present Invention:

The present invention seeks to provide an improved network attached storage system.

According to an aspect of the present invention, there is provided a network attached storage system including a server; a user device operating through a user connected network; and a plurality of storage devices coupled to the server and to the user device through the user connected network, wherein the server is connected for control purposes to the plurality of storage devices through a control channel separate from the user connected network.

The advantage of this arrangement is that the control channel can be dedicated, in the preferred embodiments, to this sole application, allowing considerable simplification of communication between the server and the storage devices, in particular with a simplified control protocol compared to prior art systems. Moreover, this can reduce bottlenecks in the system.

In the preferred embodiment, the system provides for data to be transferred to and from the storage devices to the user device directly through the user connected network. In this embodiment, bottlenecks can be reduced not only through the dedicated control channel itself but also because the storage devices communicate with the user device directly and not through the server.

Advantageously, the server is a metadata server. In this embodiment, the server operates to issue commands to the storage devices through the control channel, which commands include storage device identification, file identification and client identification. In the preferred embodiment, the server is also operable to issue an action command on a file, to be performed by the storage device.

Thus, the preferred system can provide for simple command communication between the server and the data storage devices, which requires little transmission capacity, and for data transfer to occur directly from the data storage devices to the user device (and vice versa) through the user connected network. The system is readily scaleable by the provision of additional data storage devices which simply need to be connected to the server control channel and to the client connected network. Moreover, as the data is not transferred through the server, the server need never become a data transmission bottleneck.

In the preferred embodiment, the control channel is implemented through a serial or parallel port of the server and other devices, such as an RS-422 port.

Preferably, the storage devices are storage servers.

According to another aspect of the present invention, there is provided a method of providing data to and from a user device through a network attached storage system which includes a server; a user device operating through a user connected network; and a plurality of storage devices coupled to the server and to the user device through the user connected network, including the steps of transmitting storage device control signals from the server to the data storage devices through a control channel separate from the user connected network.

In the preferred embodiment, data is transferred to and from the storage devices to the user device directly through the user connected network.

Advantageously, the server issues control commands which include storage device identification, file identification and client identification. In the preferred embodiment, the server issues an action command on a file to be performed by a storage device.

According to another aspect of the present invention, there is provided a network attached storage system including a server; a user device operating through a user connected network; and a plurality of storage devices coupled to the server and to the user device through the user connected network, wherein the server is connected to the plurality of storage devices through a control channel separate from the user connected network and is operable to issue control commands to the storage devices through the control channel, and wherein the storage devices are operable to transfer data directly to and from the user device through the user connected network.

According to another aspect of the present invention, there is provided a method of providing data to and from a user device through a network attached storage system which includes a server; a user device operating through a user connected network; and a plurality of storage devices coupled to the server and to the user device through the user connected network, including the steps of transmitting control commands from the server to the data storage devices through a control channel separate from the user connected network and transferring data to and from the data storage devices directly through the user connected network.

### Description of the Drawings:

Embodiments of the present invention are described below, by way of example only, with reference to the accompanying drawings, in which:
Figure 1 shows in schematic form an embodiment of network attached storage system; and
Figure 2 is a flow chart of an embodiment of file retrieval routine.

### Description of the Preferred Embodiments:

This description uses the following terms:
client is the user's device that holds the item of software responsible for the client-side exchanges (in the preferred embodiments using NFS or CIFS protocol);
real file is the file as seen by the user;
metadata server is the device which holds the server part of the communication protocol, which makes files visible to the client and which is responsible for controlling the dataservers in order to answer client requests;
metafile is a file on the metaserver which holds descriptive information about the file, such as file name, size, time stamps, owner, as well as the location of the actual data file on the dataservers;
datafile is the file containing the actual contents of the file; and
dataserver is the device responsible for delivering actual data file contents to the client. In practice, there will typically be provided a plurality of dataservers.

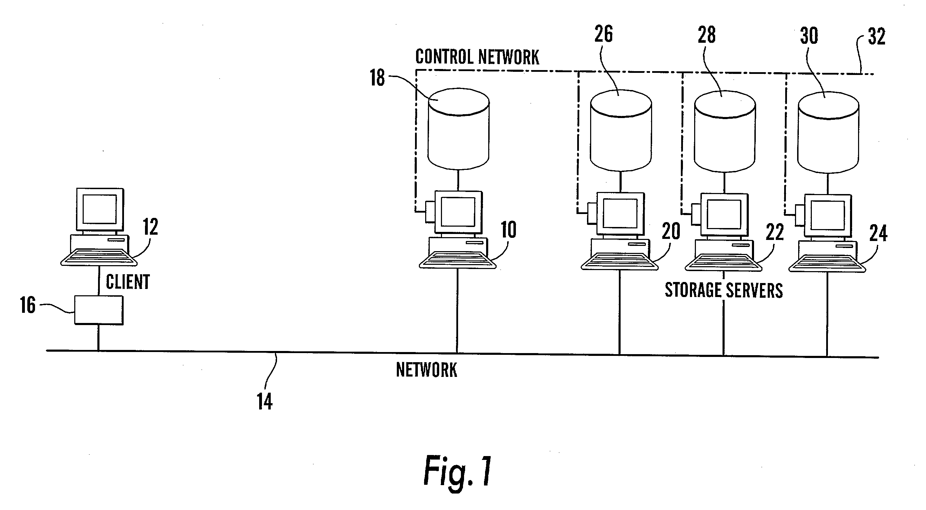

Referring to Figure 1, there is shown a preferred embodiment of network attached storage system. The system includes a metadata server 10 which can communicate with a client device 12, in this example a client computer, via a suitable network 14. The network 14 could be a direct link or, as shown in Figure 1, provided via an Internet link 16.

The metadata server 10 includes metadata storage memory 18, the purpose of which is described below.

The system is also provided with a plurality of storage servers 20 to 24, each of which has associated therewith a data storage memory 26 to 30. As can be seen in Figure 1, the storage servers 20 to 24 are coupled directly to the network 14 and thereby to the client device 12.

The metadata server 10 operates as the interface between the client device 12 and the data storage memories 26 to 30. For this purpose, a control network 32 couples the metadata server 10 to the storage servers 20 to 24.

The control network 32 provides for the transmission of control signals from the metadata server 10 to the relevant storage servers 20 to 24 and, in some embodiments, for the transmission of synchronisation signals for synchronising the metadata server and the storage servers with one another. The aim of the control network 32 is to provide a very reactive link between the storage servers 20 to 24 for broadcast purposes (preferably on a one-two-all basis). As the data broadcast from the control network 32 is limited in size, it is not necessary to have a high bandwidth link but preferably just to have low latency. For this purpose, the parallel port of a personal computer or an RS-422 port (or even an RS-232 port) can provide very fast access for such broadcast purposes and also for synchronisation of the devices. As the access through these hardware ports has a much lower latency than, for example, the Ethernet port, control messages can pass from one server to the next very quickly. This can also reduce substantially locked windows, thereby enhancing the overall performance of the system.

Of course, neither network 14 or 32 need be provided by a direct wired link. It could also be provided by a wireless link and could be direct or indirect (for example through the Internet or an intranet). It is also not excluded that the control network 32 could be provided through the Ethernet port associated to its IP stack and necessary operating system elements.

In the preferred embodiment, each command message generated and transmitted by the metadata server 10 includes the metafile (which includes the identification of the relevant data storage server 20-24), plus the action required on the file and the client identification. In one example, each command message is around 12 bytes in length, with 4 bytes being used for the client identification and action data, and 8 bytes being used for the metafile.

In practice, the metadata server 18 receives requests from the client device 12 and controls the storage servers 20 to 24 by generating the appropriate command messages and then transmitting these through the control network 32. The storage servers 20 to 24 serve to transmit data directly to the client device 12 through the network 14 and not through the metadata server 10. Thus, upon receipt of a data request, the metadata server 10 in effect passes the request to the relevant storage server 20-24 which then retrieves the required data from its data storage memory 26-30 and transmits it directly to the client 12.

In the preferred embodiment, the data storage servers 20 to 24 reply using TCP spoofing such that the client device 12 would see a data file as if it had been provided by the metadata server 10.

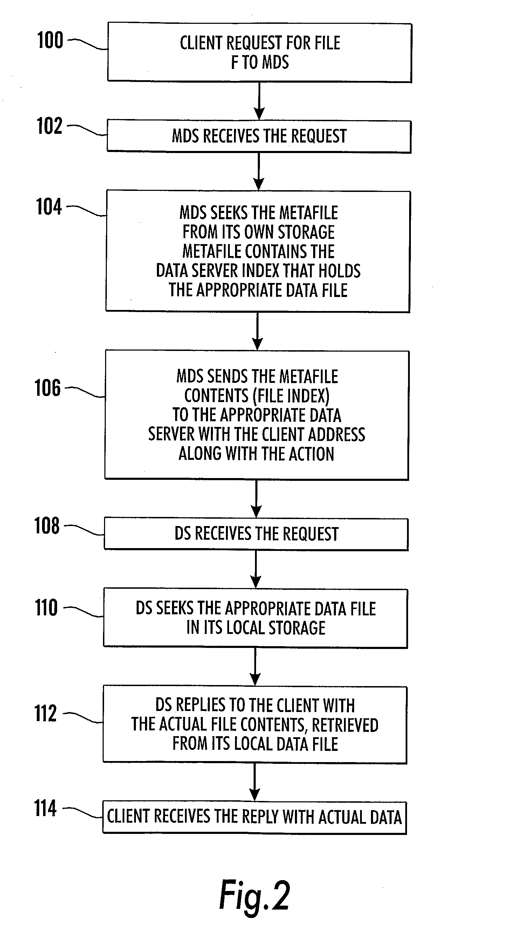

An example of routine for data transfer to the client device 12 is shown in Figure 2. At step 100 the client device 12 requests file F from the metadata server 10 through the network 14.

At step 102 the metadata server 10 receives the request and, at step 104, seeks the relevant metafile from its own storage memory 18. The metafile contains the dataserver index which holds the appropriate datafile.

At step 106, the metadata server 10 generates and transmits the appropriate command message to the appropriate dataserver 20-24 through the control network 32.

The command message is received by the appropriate dataserver 20-24 at step 108. It is envisaged in some embodiments that all the dataservers 20 to 24 would receive each command message transmitted by the metadata server 10 but that only the dataserver having the identification specified in the transmitted command message would respond.

At step 110 the appropriate dataserver 20-24 obtains the appropriate datafile from its local storage memory 26-30. At step 112, that data server 20-24 replies directly to the client device 12 through the network 14 with the actual file contents retrieved from its local datafile. At step 114, the client device 12 receives the reply with the actual requested data.

Of course, the system operates also for other forms of file access, such as when a client 12 wishes to write to a file stored in storage memory 26 to 30.

Thus, the metadata server 10 interprets the client's request and responds to that request by deferring file contents transfers to one of the dataservers 20 to 24 simply by sending the appropriate command (and, if appropriate, synchronisation) message through the low latency control network or channel 32. The system can therefore provide for much more efficient data transmission while retaining control of the data transfers through a common metadataserver 10.

The preferred embodiment connects the client device 12 using the Network File System (NFS) standard. Other embodiments could use the CIFS protocol. It is also envisaged that instead of using an NFS or CIFS server, the metadata server 10 could be a Web proxy cache which would be responsible for handling the HTTP traffic between client devices 12 and web servers connected through the Internet. A cluster of storage devices 20 to 30 can be provided on the network and interconnected to the proxy server through the same low latency type link described above. In this example, the same mechanisms would be used as in the NFS server case, in order for the storage devices to act as the actual cache servers for replying to HTTP requests from the client's device 12. The metadatasever in this case would be the proxy machine and the dataservers would be the clustered storage machines. The low latency link would be used for the proxy machine to control the data flow from/to this cluster of storage devices.

The use of the parallel or serial port for the control network 32, in particular when used specifically and only for this function, can substantially reduce the amount of handshaking required and in some implementations can avoid handshaking altogether. It can also ensure synchronisation of information since all data transmissions can be sent by the metadataserver 10 on a one-for-all basis. It can also provide good consistency of data manipulation by the close control of commands through the dedicated control channel, particularly useful with respect to handling of datafiles being modified by a client 12.

Of course, the embodiment shown in Figure 1 and described with reference to Figure 2 shows only a single client device 12 but in practice the system is likely to be used by a plurality of client devices 12. The number of client devices 12 which can access the data storage memories 26 to 30 and indeed the number of data storage memory devices provided can be scaled as required without compromising the performance of the system in any significant way.

## Claims

1. A network attached storage system including a server (18); a user device (12) operating through a user connected network (14); and a plurality of storage devices (20-24) coupled to the server and to the user device through the user connected network, wherein the server is connected for control purposes to the plurality of storage devices through a control channel (32) separate from the user connected network.

2. A system according to claim 1, wherein the system provides for data to be transferred to and from the storage devices (20-24) to the user device (12) directly through the user connected network (14).

3. A system according to claim 1 or 2, wherein the server (18) is a metadata server.

4. A system according to claim 3, wherein the server is operable to issue commands to the storage devices which include storage device identification, file identification and client identification.

5. A system according to any preceding claim, wherein the server is operable to issue an action command on a file.

6. A system according to any preceding claim, wherein the control channel is implemented through a port of the server which is of relatively low latency.

7. A system according to claim 6, wherein the port is a non-TCP port.

8. A system according to any preceding claim, wherein the control channel is implemented through one of a serial port, a parallel port, an RS-422 port and an RS-232 port.

9. A system according to any preceding claim, wherein the storage devices are storage servers (20-24).

10. A method of providing data to and from a user device (12) through a network attached storage system which includes a server (18); a user device (12) operating through a user connected network (14); and a plurality of storage devices (20-24) coupled to the server and to the user device through the user connected network, including the steps of transmitting storage device control signals from the server to the data storage devices through a control channel (32) separate from the user connected network.

11. A method according to claim 10, wherein data is transferred to and from the storage devices to the user device directly through the user connected network (14).

12. A method according to claim 10 or 11, wherein the server (18) issues control commands which include storage device identification, file identification and client identification.

13. A method according to claim 10, 11 or 12, wherein the server (18) issues an action command on a file to be performed by a storage device.

14. Use of one of one of a serial port, a parallel port, an RS-422 port and an RS-232 port to transmit control messages from a server (18) to at least one data storage device (20-24) for controlling the transfer of data between a client (12) and the storage device through a different communication channel.
